(19) Europäisches Patentamt / European Patent Office / Office européen des brevets

(11) **EP 4 534 640 A1**

(12) **EUROPEAN PATENT APPLICATION**
published in accordance with Art. 153(4) EPC

(43) Date of publication:
**09.04.2025 Bulletin 2025/15**

(21) Application number: **23816033.7**

(22) Date of filing: **30.05.2023**

(51) International Patent Classification (IPC):
*C12C 12/00* (2006.01)    *C12G 3/021* (2019.01)
*C12G 3/04* (2019.01)    *A23L 2/00* (2006.01)

(52) Cooperative Patent Classification (CPC):
**A23L 2/00; C12C 12/00; C12G 3/021; C12G 3/04**

(86) International application number:
**PCT/JP2023/019996**

(87) International publication number:
**WO 2023/234276 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 JP 2022088645**

(71) Applicant: **Suntory Holdings Limited
Osaka-shi, Osaka 530-8203 (JP)**

(72) Inventors:
• **SATOH, Yusuke
  Tokyo 108-8503 (JP)**
• **OKAJIMA, Takaho
  Fuchu-shi, Tokyo 183-8533 (JP)**

(74) Representative: **Vossius & Partner
Patentanwälte Rechtsanwälte mbB
Siebertstrasse 3
81675 München (DE)**

(54) **BEER-FLAVORED BEVERAGE**

(57) A method for producing a beer-taste beverage including a mixing step of mixing a beer-taste stock solution at and an edible aqueous solution at 3.0°C to 15.0°C.

$$\text{Conditional formula (1): } 0.1 \leq \text{ratio (X)} \leq 3.0$$

(where the ratio (X) represents a total weight of the cooling material (g) / a total volume of the beer-taste stock solution and the edible aqueous solution (mL)).

**Description**

Technical Field

The present invention relates to a method for producing a beer-taste beverage, a method for providing a beer-taste beverage, and a raw material set for producing a beer-taste beverage.

Background Art

Methods and apparatuses for producing a beer beverage by mixing a malt-based stock solution with carbonated water or the like have been known.

For example, Patent Literature 1 describes a beer beverage production method and a beer beverage dispenser apparatus for producing a malt-based fermented beverage by mixing a malt-based fermented beverage concentrate with a carbonated liquid diluent.

Citation List

Patent Literature

Patent Literature 1: WO2018/100071

Summary of Invention

Technical Problem

In this situation, for example, there is a demand for novel beer-taste beverages that allow a clean flavor and a taste suitable for beer to be felt. In addition, for example, there is a demand for a novel beer-taste beverage that allows a clean flavor and a taste suitable for beer for a long period of time.

Solution to Problem

The present invention relates to a method for producing a beer-taste beverage, comprising a mixing step of adjusting the ratio of the total weight of a cooling material to the total volume of a beer-taste stock solution and an edible aqueous solution within a specific range; a method for providing a beer-taste beverage; and a raw material set for producing a beer-taste beverage. Specifically, the present invention provides the following embodiments [1] to [14].

[1] A method for producing a beer-taste beverage comprising a mixing step of mixing a beer-taste stock solution, an edible aqueous solution, and a cooling material, which satisfies the following conditional formula (1):

$$\text{Conditional formula (1): } 0.1 \leq \text{ratio (X)} \leq 3.0$$

(where the ratio (X) = a total weight of the cooling material (g) / a total volume of the beer-taste stock solution and the edible aqueous solution (mL)).

[2] The production method according to [1], wherein the mixing step consists of a step of mixing the cooling material with the beer-taste stock solution and then with the edible aqueous solution.

[3] The production method according to [1] or [2], wherein the mixing step consists of a step of mixing the cooling material with the edible aqueous solution and then with the beer-taste stock solution.

[4] The production method according to any one of [1] to [3], which satisfies the following Conditional formula (2):

$$\text{Conditional formula (2): } 50 \leq \text{ratio (Y)} \leq 1000$$

(where the ratio (Y) represents the total surface area of the cooling material ($mm^2$) / the total weight of the cooling material (g)).

[5] The production method according to any one of [1] to [4], which satisfies the following Conditional formula (3):

$$\text{Conditional formula (3): } 1.5 \leq \text{ratio (Z)} \leq 7.0$$

[6] The method according to any one of [1] to [5], wherein the mixing step is performed in an open container.

[7] The production method according to [6], wherein the open container has a volume of 3.0 L or less.

[8] The method according to any one of [1] to [7], wherein the edible aqueous solution is an aqueous solution containing carbon dioxide.

[9] The production method according to any one of [1] to [8], wherein the cooling material is ice.

[10] A beer-taste beverage produced by the production method according to any one of the [1] to [9].

[11] A method for providing a beer-taste beverage comprising mixing a beer-taste stock solution, an edible aqueous solution, and a cooling material, which satisfies the following conditional formula (1):

$$\text{Conditional formula (1): } 0.1 \leq \text{ratio (X)} \leq 3.0$$

(where the ratio (X) represents the total weight of the cooling material (g) / the total volume of the beer-taste stock solution and the edible aqueous solution (mL)).

[12] The provision method according to [11], wherein the cooling material is ice.

[13] A raw material set for producing a beer-taste beverage comprising a beer-taste stock solution, an edible aqueous solution, and a cooling material, wherein the method satisfies the following conditional formula (1):

$$\text{Conditional formula (1): } 0.1 \leq \text{ratio (X)} \leq 3.0$$

(where the ratio (X) represents the total weight of the cooling material (g) / the total volume of the beer-taste stock solution and the edible aqueous solution (mL)).

[14] The raw material set for producing a beer-taste beverage according to [13], wherein the cooling material is ice.

Advantageous Effects of Invention

A beer-taste beverage obtained by the method for producing a beer-taste beverage according to one preferred embodiment of the present invention can be, for example, a beer-taste beverage suitable for beer. In addition, a beer-taste beverage obtained by the method for producing a beer-taste beverage according to one preferred embodiment of the present invention can be, for example, a beverage having a high degree of preference (a degree to which the flavor is perceived as purely delicious). Moreover, a beer-taste beverage obtained by the method for producing a beer-taste beverage according to one preferred embodiment of the present invention can be, for example, a beverage having a clean flavor.

Further, a beer-taste beverage obtained by the method for producing a beer-taste beverage according to one preferred embodiment of the present invention can be a beverage having a high degree of preference and a clean flavor suitable for beer for a relatively long period of time.

Description of Embodiments

The method for producing a beer-taste beverage according to one embodiment of the present invention includes a mixing step of mixing a beer-taste stock solution and an edible aqueous solution.

1. Beer-taste beverage

The beer-taste beverage according to one embodiment of the present invention is produced via a mixing step of mixing a beer-taste stock solution and an edible aqueous solution.

Therefore, the term "beer-taste beverage" in the present description refers to a beverage obtained via a mixing step of mixing a beer-taste stock solution and an edible aqueous solution, which is an alcoholic or non-alcoholic carbonated drink with a beer-like flavor. In other words, unless otherwise specified, the beer-taste beverage in the present description includes any carbonated beverage that has a beer flavor.

2. Beer-taste stock solution

The term "beer-taste stock solution" in the present description refers to an edible solution for producing a beer-taste beverage by mixing the stock solution and an edible aqueous solution. The beer-taste stock solution is not particularly limited as long as it is a liquid that is mixed with an edible aqueous solution, thereby allowing a beer-taste beverage to be produced.

The beer-taste stock solution according to one embodiment of the present invention is diluted when mixed with the edible aqueous solution. Therefore, it is preferable that the beer-taste stock solution has an ethanol concentration, a flavor component (ester, higher alcohol, etc.) concentration, an original extract concentration, a color, a bitterness value, and the like higher than those of general beer-taste beverages.

The beer-taste stock solution includes, for example, not only a fermented stock solution obtained by fermenting malts, hops, and water as raw materials using yeast but also a stock solution to which beer flavors containing flavor components such as an ester, a higher alcohol, and lactone have been added. The beer-taste stock solution may also be a carbonated stock solution that contains carbon dioxide or a non-carbonated stock solution that does not contain carbon dioxide.

Examples of the flavor components contained in the beer flavor may include isoamyl acetate, ethyl acetate, n-propanol (1-propanol, etc.), isobutanol, acetaldehyde, ethyl caproate, ethyl caprylate, isoamyl propionate, linalool, geraniol, citral, 4-vinyl guaiacol (4-VG), 4-methyl-3-pentenoic acid, 2-methyl-2-pentenoic acid, 1,4-cineole, 1,8-cineole, 2,3-diethyl-5-methylpyrazine, $\gamma$-decanolactone, $\gamma$-undecalactone, ethyl hexanoate, ethyl 2-methylbutyrate, ethyl n-butyrate, myrcene, citral, limonene, maltol, ethyl maltol, phenylacetic acid, furaneol, furfural, methional, 3-methyl-2-butene-1-thiol, 3-methyl-2-butanethiol, diacetyl, ferulic acid, geranic acid, geranyl acetate, ethyl butyrate, octanoic acid, decanoic acid, 9-decenoic acid, nonanoic acid, tetradecanoic acid, propanoic acid, 2-methylpropanoic acid, $\gamma$-butyrolactone, 2-aminoacetophenone, ethyl 3-phenylpropionate, 2-ethyl-4-hydroxy-5-methyl-3(2H)-furanone, dimethylsulfone, 3-methylcyclopentane-1,2-dione, 2-methylbutanal, 3-methylbutanal, 2-methyltetrahydrofuran-3-one, 2-acetylfuran, 2-methyltetrahydrofuran-3-one, hexanal, hexanol, cis-3-hexenal, 1-octen-3-ol, $\beta$-eudesmol, 4-mercapto-4-methylpentan-2-one, $\beta$-caryophyllene, $\beta$-myrcene, furfuryl alcohol, 2-ethylpyrazine, 2,3-dimethylpyrazine, 2-methylbutyl acetate, isoamyl alcohol, 5-hydroxymethylfurfural, phenylacetaldehyde, 1-phenyl-3-buten-1-one, trans-2-hexenal, nonanal, phenethyl alcohol, nerol, citronellol, methyl p-toluate, 1,2,3,5-tetramethylbenzene, triethyl citrate, tributyl citrate, diethyl tartrate, dibutyl malate, perillaldehyde, methylheptenone, lemon myrtle, and cinnamaldehyde.

Moreover, the beer-taste stock solution according to one embodiment of the present invention may be a fermented beer-taste stock solution produced by performing a fermentation step using yeast or may also be a non-fermented beer-taste stock solution produced without performing such a fermentation step.

The fermented beer-taste stock solution may be either an ale beer-taste stock solution brewed through a fermentation step using a top fermentation yeast (Saccharomyces, etc.), a lager beer-taste stock solution brewed through a fermentation step using a bottom fermentation yeast (Saccharomyces, etc.), or a Pilsner beer-taste stock solution. Furthermore, the "fermentation" referred to in the present description may be alcoholic fermentation, in which alcohol is produced, or non-alcoholic fermentation, in which alcohol is not produced.

In addition, the beer-taste stock solution according to one embodiment of the present invention may be either a beer-taste stock solution comprising a malt, in which a malt is used as a raw material, or a beer-taste stock solution not comprising a malt, in which a malt is not used as a raw material. A beer-taste stock solution comprising a malt is, for example, a beer-taste stock solution comprising a barley malt.

The alcohol percentage (ethanol content (v/v)%) of the beer-taste stock solution according to one embodiment of the present invention is not particularly limited. However, the alcohol percentage may be, for example, 0.0 (v/v)% or more, more than 0.0 (v/v)%, 0.1 (v/v)% or more, 0.3 (v/v)% or more, 0.5 (v/v)% or more, 0.7 (v/v)% or more, 1.0 (v/v)% or more, 2.0 (v/v)% or more, 3.0 (v/v)% or more, 3.5 (v/v)% or more, 4.0 (v/v)% or more, 4.5 (v/v)% or more, 5.0 (v/v)% or more, 5.5 (v/v)% or more, 6.0 (v/v)% or more, 6.5 (v/v)% or more, 7.0 (v/v)% or more, 8.0 (v/v)% or more, or 9.0 (v/v)% or more. From the viewpoint of satisfying quality of a beverage, the alcohol percentage is preferably 10.0 (v/v)% or more, more preferably 10.5 (v/v)% or more, and further preferably 11.0 (v/v)% or more, and may further be 11.5 (v/v)% or more, 12.0 (v/v)% or more, 12.5 (v/v)% or more, 13.0 (v/v)% or more, 13.5 (v/v)% or more, or 14.0 (v/v)% or more, 15.0 (v/v)% or more, 16.0 (v/v)% or more, 17.0 (v/v)% or more, 18.0 (v/v)% or more, 19.0 (v/v)% or more, 20.0 (v/v)% or more, 21.0 (v/v)% or more, 22.0 (v/v)% or more, 23.0 (v/v)% or more, 24.0 (v/v)% or more, or 25.0 (v/v)% or more. In addition, the alcohol percentage of the beer-taste stock solution may also be 50.0 (v/v)% or less, 45.0 (v/v)% or less, 35.0 (v/v)% or less, 30.0 (v/v)% or less, less than 25.0 (v/v)%, 24.0 (v/v)% or less, 23.0 (v/v)% or less, 22.0 (v/v)% or less, 21.0 (v/v)% or less, 20.0 (v/v)% or less, 19.5 (v/v)% or less, 19.0 (v/v)% or less, 18.5 (v/v)% or less, 18.0 (v/v)% or less, 17.5 (v/v)% or less, 17.0 (v/v)% or less, 16.5 (v/v)% or less, 16.0(v/v)% or less, 15.5(v/v)% or less, 15.0(v/v)% or less, 14.5(v/v)% or less, 14.0(v/v)% or less, 13.5(v/v)% or less, 13.0(v/v)% or less, 12.5(v/v)% or less, 12.0(v/v)% or less, 11.5(v/v)% or less, 11.0(v/v)% or less, 10.5(v/v)% or less, 10.0(v/v)% or less, 9.5(v/v)% or less, 9.0 (v/v)% or less, 8.5(v/v)% or less, or 8.0(v/v)% or less.

Moreover, the beer-taste beverage of the present invention may be a non-alcoholic beer-taste beverage having an alcohol percentage of less than 1 (v/v)%. The alcohol percentage of a beer-taste stock solution for producing a non-alcoholic beer-taste beverage is set to preferably 0.8 (v/v)% or less, 0.7 (v/v)% or less, 0.6 (v/v)% or less, 0.4 (v/v)% or less, 0.2 (v/v)% or less, or less than 0.1 (v/v)%.

Besides, in the present description, the alcohol percentage is indicated with the percentage (v/v)% of volume/-volume basis. In addition, the content of alcohol in a beverage can be measured by all of known methods, and it can be measured, for example, using an oscillatory density meter.

Moreover, the alcohol percentage of the beer-taste stock solution according to one embodiment of the present invention can be adjusted in a desired range by determining, as appropriate, the addition of a diluting solution or carbonated water and the additive amount thereof when added, the types of raw materials (*mugi,* malts, corn grits, a sugar solution, etc.), the amounts of the raw materials, the type of an enzyme, the additive amount of the enzyme, the timing of adding the enzyme, the saccharification time in a preparation tank, the proteolysis time in the preparation tank, the pH in the preparation tank, the pH in a preparation step (a wort-producing step from addition of the malts until addition of the yeast), the additive amount of an acid used upon the pH adjustment, the timing of the pH adjustment (at the time of preparation, during fermentation, at completion of the fermentation, before beer filtration, after beer filtration, etc.), the preset temperature in each temperature range and retention time during preparation of a wort (including during saccharification), the concentration of an original extract in a pre-fermentation solution, the concentration of an original extract in a fermentation step, fermentation conditions (oxygen concentration, aeration conditions, the variety of the yeast, the additive amount of the yeast, the number of proliferating yeast cells, the timing of removing the yeast, fermentation temperature, fermentation time, pressure setting, carbon dioxide concentration, etc.), addition or non-addition of spirits, distilled alcohols and the like and the additive amounts thereof when added, etc.

The beer-taste stock solution according to one embodiment of the present invention may contain a spirit (distilled liquor) derived from grains as an alcohol component in order to adjust the alcohol percentage to fall within the above-described range.

In the present description, the spirits mean alcohols obtained by using, as raw materials, grains such as *mugi,* rice, buckwheat, corn, potatoes, or sugarcane, saccharifying the raw material grains using malts, or as necessary, an enzyme agent, then fermenting the resultants using yeasts, and then, further distilling the fermented products. The grain as a raw material of spirits is preferably a Gramineae plant and more preferably *mugi.*

The beer-taste beverage of one embodiment of the present invention may be a beverage that does not contain spirits from the viewpoint of being a beer-taste beverage suitable for beer having a high-quality flavor.

The ratio of malts in the beer-taste beverage according to one embodiment of the present invention may be 10% by mass or more, 20% by mass or more, 30% by mass or more, 40% by mass or more, 45% by mass or more, 46% by mass or more, 47% by mass or more, 48% by mass or more, 49% by mass or more, 50% by mass or more, 51% by mass or more, 52% by mass or more, 53% by mass or more, 54% by mass or more, 55% by mass or more, 56% by mass or more, 57% by mass or more, 58% by mass or more, 59% by mass or more, 60% by mass or more, 61% by mass or more, 62% by mass or more, 63% by mass or more, 64% by mass or more, 65% by mass or more, 66% by mass or more, more than 66% by mass, 67% by mass or more, 70% by mass or more, 75% by mass or more, 80% by mass or more, 85% by mass or more, 90% by mass or more, 95% by mass or more, or 100% by mass. It may also be 100% by mass or less, less than 100% by mass, 98% by mass or less, 95% by mass or less, 90% by mass or less, 85% by mass or less, 80% by mass or less, 75% by mass or less, 70% by mass or less, 68% by mass or less, 67% by mass or less, less than 67% by mass, 66% by mass or less, 65% by mass or less, 64% by mass or less, 63% by mass or less, 62% by mass or less, 61% by mass or less, 60% by mass or less, 59% by mass or less, 50% by mass or less, or less than 50% by mass.

In the present description, the percentage of the malts means a value calculated in accordance with the Notification of the Interpretation of the Liquor Tax Law and Other Laws and Orders relating to the Administration of Liquor Affairs (date of enforcement: April 1, 2018).

When the ratio of the malts is suppressed, it is preferable to increase the amounts of raw materials other than the malts, which can be assimilated by yeasts (i.e., a carbon source and a nitrogen source). Examples of the carbon source as a raw material, which can be assimilated by yeasts, may include monosaccharide, disaccharide, trisaccharide, and sugar solutions thereof. Examples of the nitrogen source as a raw material, which can be assimilated by yeasts, may include yeast extracts, soybean proteins, malts, soybeans, yeast extracts, peas, wheat malts, ungerminated grains, and decomposition products thereof. Examples of the ungerminated grains may include ungerminated barley, wheat, rye, wild oats, oats, adlay, Avena sativa, rice (white rice, brown rice, etc.), corn, corn, potatoes, beans (soybeans, peas, etc.), buckwheat, sorghum, millet, and barnyard millet. In addition, starches obtained from these grains and extracts thereof may also be used.

The original extract (O-Ex) concentration of the beer-taste stock solution according to one embodiment of the present invention may be 6.0% by mass or more, 6.5% by mass or more, 7.0% by mass or more, 7.5% by mass or more, 8.0% by mass or more, 8.5% by mass or more, 9.0% by mass or more, 10.0% by mass or more, 11.0% by mass or more, 12.0% by mass or more, 13.0% by mass or more, 14.0% by mass or more, 15.0% by mass or more, 16.0% by mass or more, 17.0% by mass or more, 18.0% by mass or more, 19.0% by mass or more, 20.0% by mass or more, 21.0% by mass or more, 22.0% by mass or more, 23.0% by mass or more, 24.0% by mass or more, 25.0% by mass or more, or 26.0% by mass or more, It may also be 50.0% by mass or less, 45.0% by mass or less, 40.0% by mass or less, 35.0% by mass or less, 30.0% by mass or less, 29.0% by mass or less, 28.0% by mass or less, 27.0% by mass or less, 26.0% by mass or less, 25.0% by mass or less, 24.0% by mass or less, 23.0% by mass or less, 22.0% by mass or less, 21.0% by mass or less, 20.0% by mass or less, 18.0% by mass or less, 16.0% by mass or less, 15.0% by mass or less, or 13.5% by mass or less.

The "original extract concentration" in the present description means, in the case of an alcohol-containing stock solution having an alcohol percentage of 1 (v/v)% or more, an extracted component according to the Japanese Liquor Tax Law, namely, nonvolatile components in grams contained in 100 $cm^3$ of an original volume at a temperature of 15°C. On the other hand, in the case of a non-alcoholic stock solution having an alcohol percentage of less than 1 (v/v)%, the original wort extract concentration means an extract value (% by mass) that is obtained by measuring a degassed sample according to an analysis method defined by Brewers Association of Japan, Brewery Convention of Japan (BCOJ) (BCOJ Beer Analysis Method (published by the Brewing Society of Japan, edited by Brewers Association of Japan, revised and expanded in 2013)).

The pH of the beer-taste stock solution according to one embodiment of the present invention is preferably 2.0 or more, 2.2 or more, 2.4 or more, 2.6 or more, 2.8 or more, 3.0 or more, 3.1 or more, 3.2 or more, 3.3 or more, 3.4 or more, 3.5 or more, 3.6 or more, 3.7 or more, 3.8 or more, 3.9 or more, or 4.0 or more. On the other hand, it is preferably 5.4 or less, 5.2 or less, 5.0 or less, 4.9 or less, 4.8 or less, 4.7 or less, 4.6 or less, 4.55 or less, or 4.5 or less. It may also be 4.0 or less or less than 4.0.

The beer-taste stock solution according to one embodiment of the present invention may be in the form of a container. Examples of the container may include a barrel, a bottle, a plastic bottle, or a can.

## 2. 1 Raw materials

As the main raw materials for the beer-taste stock solution according to one embodiment of the present invention, malts may be used together with water, or malts may not be used. Furthermore, the beer-taste stock solution according to one embodiment of the present invention may be a beverage that uses hops as an ingredient or a beverage that does not use hops.

Other than these raw materials, a preservative, a sweetener, water-soluble dietary fibers, a bittering agent or a bitterness-imparting agent, an antioxidant, a flavor, an acidulant, a salt, and the like may also be used.

## 2. 1. 1 Malts and grains other than malts

When malts are used as raw materials, the malts mean those obtained by germinating the seeds of *mugi* plants such as barley, wheat, rye, wild oats, oats, adlay, or *Avena sativa,* then drying them, and then removing roots. The production area and variety of the used malts are not particularly limited.

In one embodiment of the present invention, the used malts are preferably barley malts. The barley malts are one type of malts that are most commonly used as raw materials of beer-taste beverages in Japan. Barley has several types such as two-row barley and six-row barley. All types of barley may be used. Further, in addition to common malts, colored malts and the like can also be used. When such colored malts are used, different types of colored malts may be appropriately used in combination, or only one type of colored malts may also be used.

The malts used in one embodiment of the present invention have a modification of preferably 80% or more. When the modification is less than 80%, the viscosity and turbidity of the wort may increase, resulting in poor production efficiency, such as wort filterability and beer filterability. Therefore, it is preferable to use malts with a modification of 80% or more. In the Examples and Comparative Examples described below, malts with a modification of 80% or more were used. The modification can be measured by the method described in MEBAK Raw Materials Barley Adjuncts Malt Hops And Hop Products Published by the Chairman Dr. Fritz Jacob Self-published by MEBAK 85350 Freising-Weihenstephan, Germany 2011, 3.1.3.8 Modification and Homogeneity (Calcofluor Carlsberg Method-EBC).

In the beer-taste beverage according to one embodiment of the present invention, the malts used are preferably selected appropriately depending on the desired chromaticity of the beer-taste beverage, and the malt selected may be a single type, or two or more types may be selected in combination.

Moreover, together with or instead of such malts, grains other than the malts may also be used.

Examples of such grains may include *mugi* that does not correspond to malts (e.g., barley, wheat, rye, wild oats, oats, adlay, Avena sativa, etc.), rice (e.g., white rice, brown rice, etc.), corns, kaoliangs, potatoes, beans (e.g., soybeans, garden peas, etc.), buckwheat, sorghum, foxtail millet, barnyard millet, starches obtained from these grains, and extracts thereof.

When the ratio of the malts is suppressed, or malts are not used, it is preferable to increase the amounts of raw materials other than the malts, which can be assimilated by yeasts (i.e., a carbon source and a nitrogen source). Examples of the carbon source as a raw material, which can be assimilated by yeasts, may include monosaccharide, disaccharide, trisaccharide, and sugar solutions thereof. Examples of the nitrogen source may include yeast extracts, amino acid-containing materials (e.g., soy proteins, etc.), soybeans, yeast extracts, peas, wheat malts, ungerminated grains, and decomposition products thereof.

The fruits, fruit skins, bark, leaves, flowers, stems, roots, and seeds of plants other than Gramineae plants such as *mugi* that can be used as raw materials can be appropriately selected.

Specific examples of plants other than Gramineae plants may include citrus fruits, soft fruits, herbs, and spices. Examples of citrus fruits may include oranges, *yuzu* (*Citrus junos),* lemons, limes, mandarins, grapefruits, *iyokan* (*Citrus iyo),* kumquats, *kabosu* (*Citrus sphaerocarpa*), *daidai* (*Citrus aurantium*), *shekwasha* (*Citrus depressa*), and *sudachi* (*Citrus sudachi*).

These may be used as they are, or may be crushed before use, or may be used in the form of an extract extracted with an extraction solvent such as water or ethanol, or may be used in the form of squeezed juice (such as fruit juice). These may be used alone, or may also be used in combination of two or more types.

The above ingredients can be used as appropriate according to consumer preferences, but in order to enjoy the clean and refreshing flavor that is characteristic of beer, it is preferable to not use any of the above citrus fruits, soft fruits, herbs, and spices as ingredients, or to use them in the minimum amount possible. In particular, blackcurrants impart an undesirable milky aroma to beer. Therefore, it is preferable not to use blackcurrants or blackcurrant juice as ingredients at all or to use only the minimum amount possible.

## 2. 1. 2 Hops

When hops are used in one embodiment of the present invention, examples of the forms of hops may include pelletized hops, powdered hops, and hop extracts. In addition, the used hops may also be hop-processed products such as isomerized hops and reduced hops.

In the case of using such hops in one embodiment of the present invention, the additive amount of hops is appropriately adjusted but is preferably 0.0001 % to 1% by mass with respect to the total amount (100% by mass) of the raw materials for the beverage.

Moreover, a beer-taste beverage comprising hops as raw materials becomes a beverage containing an iso-alpha acid that is a component derived from the hops. The content of the iso-alpha acid in the beer-taste beverage comprising hops may be more than 0.1 ppm by mass, and may also be more than 1.0 ppm by mass, based on the total amount (100% by mass) of the beer-taste beverage.

On the other hand, the content of the iso-alpha acid in a beer-taste beverage that does not comprise hops may be 0.1 ppm by mass or less, based on the total amount (100% by mass) of the beer-taste beverage.

Besides, in the present description, the content of the iso-alpha acid means a value measured according to a high performance liquid chromatography (HPLC) analysis method described in "Revised Version Brewery Convention of Japan (BCOJ) Beer Analysis Method (published by the Brewing Society of Japan, edited by Brewers Association of Japan, Brewery Convention of Japan [Analysis Committee], and enlarged and revised in 2013)."

## 2. 1. 3 Additives

The beer-taste beverage according to one embodiment of the present invention may comprise various additives, as necessary, to such an extent that the additives do not impair the effects of the present invention.

Examples of such additives may include preservatives, sweeteners, bittering agents, bitterness imparting agents, antioxidants, flavors, acidulants, salts, coloring agents, foaming agents, fermentation promoters, yeast extracts, protein substances such as peptide-containing matters, and condiments such as amino acids.

## 2. 2 Carbon dioxide gas

Carbon dioxide gas may or may not be dissolved in the beer-taste stock solution according to one embodiment of the present invention.

As carbon dioxide gas contained in the beer-taste stock solution, carbon dioxide gas contained in the raw materials may be utilized, or carbon dioxide gas may be dissolved in the beverage by the mixing of the beverage with carbonated water, addition of carbon dioxide gas to the beverage, and the like.

2. 3. Method for producing beer-taste stock solution

The method for producing a beer-taste stock solution according to one embodiment of the present invention is not particularly limited, and production can be carried out in a manner similar to that for ordinary beer-taste beverages. The method for producing a beer-taste stock solution according to one embodiment of the present invention may be a production method with or without a fermentation step.

3. Edible aqueous solution

The term "edible aqueous solution" in the present description refers to a solution in which one or more edible components are dissolved in water. The edible component is not particularly limited and may be a solid, a liquid such as vegetable oil, or a gas such as carbon dioxide gas.
The edible aqueous solution to be mixed with the beer-taste stock solution according to the present invention is not particularly limited and may be an effervescing aqueous solution such as cider, *ramune* (Japanese carbonated soft drink), coke, or carbonated water, or a non-effervescing aqueous solution such as soft drinks, tea, or black tea. Effervescing aqueous solutions are preferable, aqueous solutions containing carbon dioxide are more preferable, carbonated drinks are further preferable, and carbonated water is particularly preferable.

The concentration of the carbon dioxide gas in the edible aqueous solution of the present invention may be preferably 0.30 (w/w)% or more, more preferably 0.35 (w/w)% or more, further preferably 0.40 (w/w)% or more, still further preferably 0.42 (w/w)% or more, and particularly preferably 0.45 (w/w)% or more. On the other hand, it may also be preferably 0.90 (w/w)% or less, 0.80 (w/w)% or less, 0.70 (w/w)% or less, 0.6 (w/w)% or less, or 0.55 (w/w)% or less.

Besides, in the present description, the concentration of carbon dioxide gas can be measured by immersing a container, in which a beverage used as a target is placed, in a water tank at 20°C for 30 minutes or more, while sometimes shaking the container, so that the temperature of the beverage is adjusted to be 20°C, and then measuring the concentration using a gas volume measuring device (for example, GVA-500 (manufactured by KYOTO ELECTRONICS MANUFACTURING CO., LTD.), etc.).

When the edible aqueous solution according to one embodiment of the present invention is container-packed, the carbon dioxide gas pressure thereof may be adjusted, as appropriate, in a range in which the concentration of the carbon dioxide gas becomes in the above-described concentration range. The carbon dioxide gas pressure of the beverage may be 5.0 kg/cm$^2$ or less, 4.5 kg/cm$^2$ or less, or 4.0 kg/cm$^2$ or less, and 0.20 kg/cm$^2$ or more, 0.50 kg/cm$^2$ or more, or 1.0 kg/cm$^2$ or more. Besides, these upper limits and lower limits may be combined with one another in any way, and for example, the carbon dioxide gas pressure may be 0.20 kg/cm$^2$ or more and 5.0 kg/cm$^2$ or less, 0.50 kg/cm$^2$ or more and 4.5 kg/cm$^2$ or less, or 1.0 kg/cm$^2$ or more and 4.0 kg/cm$^2$ or less.

In the present description, the gas pressure means a gas pressure in a container, unless otherwise specified.

The pressure can be measured by a method well known to those skilled in the art, and for example, the pressure can be measured by applying a method comprising fixing a sample set at 20°C in a gas pressure gauge, then once opening the stopper cock of the gas pressure gauge to discharge gas, then closing the stopper cock again, then shaking the gas pressure gauge, and then reading the value when the indicator reaches a predetermined position, or by using a commercially available gas pressure measurement device.

4. Cooling material

In the present description, the term "cooling material" is not particularly limited as long as it is an edible solid obtained by solidifying water, an edible aqueous solution, or the like, a cooled metal block, a sealed ice pack containing a cold storage agent, or another inedible solid; however, it is preferably a solid obtained by solidifying water (ice).

In the present invention, the use of a cooling material allows suppressing the rate of increase in the liquid temperature of the contained beverage due to the function of the cooling material. Therefore, a beer-taste beverage having a clean flavor, a taste suitable for beer, and a high degree of preference can be provided.

Ice can be made in a regular freezer. The freezer may be a domestic freezer or a commercial freezer. The shape of the ice is not particularly limited, but it is preferable to use ice with a spherical, ellipsoidal, rectangular parallelepiped, cubic, or other shape.

The ice may be cut into pieces by cutting ice of a predetermined shape using an ice cutting machine such as an ice shaving machine.

The surface area of a spherical cooling material can be calculated as $4\pi r^2$ (r is the radius of the sphere and $\pi$ is the

circumference of the circle). The surface area of a rectangular parallelepiped cooling material with length a, width b, and height c can be calculated as $2 \times (ab + bc + ca)$.

5. Method for producing beer-taste beverage

The method for producing a beer-taste beverage according to one embodiment of the present invention includes a mixing step of mixing a beer-taste stock solution, an edible aqueous solution, and a cooling material. In addition, since the mixing step of the production method of the present invention can be carried out at restaurants and homes, freshly made beer-taste beverages can be provided.

In the method for producing a beer-taste beverage according to one embodiment of the present invention, the ratio (X) of the total weight of the cooling material (g) to the total volume of the beer-taste stock solution and the edible aqueous solution satisfies the following conditional formula (1):

$$\text{Conditional formula (1): } 0.1 \leq \text{ratio (X)} \leq 3.0$$

(where the ratio (X) represents the total weight of the cooling material (g) / the total volume of the beer-taste stock solution and the edible aqueous solution (mL)).

When the ratio (X) in the conditional formula (1) increases, the degree of preference, the clean flavor, and the taste suitable for beer tend to improve. In addition, when the ratio (X) decreases, the rate of increase in the temperature of the beer-taste beverage produced increases, causing the degree of preference, the clean flavor, and the taste suitable for beer to deteriorate within a short period of time. Therefore, the ratio (X) is 0.1 to 3.0 in the production method of the present invention.

From the above viewpoint, the ratio (X) may be preferably 0.12 or more, more preferably 0.14 or more, further preferably 0.16 or more, still further preferably 0.18 or more, still further preferably 0.20 or more, still further preferably 0.22 or more, still further preferably 0.24 or more, still further preferably 0.26 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.90 or more, 1.00 or more, 1.10 or more, 1.20 or more, 1.30 or more, or 1.40 or more.

Moreover, from the above viewpoint, the ratio (X) is preferably 2.95 or less, more preferably 2.90 or less, further preferably 2.85 or less, still further preferably 2.80 or less, still further preferably 2.75 or less, still further preferably 2.70 or less, still further preferably 2.65 or less, still further preferably 2.60 or less, still further preferably 2.55 or less, still further preferably 2.50 or less, still further preferably 2.45 or less, still further preferably 2.40 or less, still further preferably 2.35 or less, still further preferably 2.30 or less, still further preferably 2.25 or less, still further preferably 2.20 or less, still further preferably 2.15 or less, still further preferably 2.10 or less, still further preferably 2.05 or less, still further preferably 2.00 or less, still further preferably 1.95 or less, more preferably 1.90 or less, still further preferably 1.85 or less, still further preferably 1.80 or less, still further preferably 1.75 or less, still further preferably 1.70 or less, still further preferably 1.65 or less, still further preferably 1.60 or less, still further preferably 1.55 or less, still further preferably 1.50 or less, still further preferably 1.45 or less, still further preferably 1.40 or less, still further preferably 1.35 or less, still further preferably 1.30 or less, still further preferably 1.25 or less, still further preferably 1.20 or less, still further preferably 1.15 or less, still further preferably 1.10 or less, still further preferably 1.05 or less, still further preferably 1.00 or less, preferably 0.95 or less, still further preferably 0.90 or less, and particularly preferably 0.85 or less, which may be 0.80 or less, 0.75 or less, 0.70 or less, 0.65 or less, 0.60 or less, 0.55 or less, 0.50 or less, 0.45 or less, 0.40 or less, 0.35 or less, or 0.30 or less.

Preferably, the ratio (Y) of the total surface area of the cooling material (mm$^2$) to the total weight of the cooling material (g) satisfies the following conditional formula (2) in the method for producing a beer-taste beverage according to one embodiment of the present invention:

$$\text{Conditional formula (2): } 50 \leq \text{ratio (Y)} \leq 1000$$

(where the ratio (Y) represents the total surface area of the cooling material (mm$^2$) / the total weight of the cooling material (g)).

When the ratio (Y) in the conditional formula (2) is large, the total surface area of the cooling material is relatively large, making it easy to maintain the beer-taste beverage at a low temperature. On the other hand, in a case in which an edible solid formed by solidifying water, an edible aqueous solution, or the like is used for the cooling material, the solid tends to melt; thus, the degree of preference, the clean flavor, and the taste suitable for beer tend to deteriorate within a short period of time. In addition, when the ratio (Y) is small, the surface area of the cooling material is relatively small. Therefore, even in a case in which an edible solid formed by solidifying water, an edible aqueous solution, or the like is used for the cooling material, the solid is unlikely to melt; thus, the degree of preference, the clean flavor, and the taste suitable for beer tend to be readily maintained for a long period of time.

Therefore, the ratio (Y) in the production method according to one embodiment of the present invention is preferably 50 or more, more preferably 75 or more, further preferably 100 or more, still further preferably 125 or more, still further preferably 150 or more, still further preferably 175 or more, still further preferably 200 or more, and particularly preferably 225 or more. On the other hand, the ratio (Y) is preferably 1000 or less, more preferably 900 or less, further preferably 800 or less, still further preferably 700 or less, still further preferably 600 or less, still further preferably 550 or less, still further preferably 500 or less, still further preferably 450 or less, still further preferably 400 or less, still further preferably 350 or less, and particularly preferably 300 or less.

Preferably, the ratio (Z) (mixing ratio) of the weight of the edible aqueous solution (g) to the weight of the beer-taste stock solution (g) satisfies the following conditional formula (3) in the method for producing a beer-taste beverage according to one embodiment of the present invention:

$$\text{Conditional formula (3): } 1.5 \leq \text{ratio (Z)} \leq 7.0$$

(where the ratio (Z) represents a total weight of the edible aqueous solution (g) / a weight of the beer-taste stock solution (g)).

As the ratio (Z) in the conditional formula (3) decreases, the concentration of the components in the beer-taste stock solution increases, increasing the degree of preference and causing the sensation of the taste suitable for beer to be enhanced. Therefore, the ratio (Z) is preferably less than 7.0, more preferably 6.5 or less, and further preferably 6.0 or less, which may be 5.5 or less, 5.0 or less, 4.5 or less, 4.0 or less, 3.5 or less, 3.0 or less, 2.5 or less, or 2.0 or less.

As the ratio (Z) increases, the concentration of the components in the beer-taste stock solution decreases, increasing the degree of preference and causing the sensation of the clean flavor to be enhanced. Therefore, the ratio (Z) may be preferably 1.5 or more, more preferably 1.7 or more, and further preferably 2.0 or more, which may be 2.2 or more, 2.4 or more, 2.6 or more, 2.8 or more, 3.0 or more, 3.2 or more, 3.4 or more, 3.6 or more, 3.8 or more, 4.0 or more, 4.2 or more, 4.4 or more, 4.6 or more, 4.8 or more, 5.0 or more, 5.2 or more, 5.4 or more, 5.6 or more, 5.8 or more, or 6.0 or more. On the other hand, the ratio (Z) may be 10.0 or less, 9.5 or less, 9.0 or less, 8.5 or less, 8.0 or less, 7.5 or less, 7.0 or less, 6.5 or less, 6.0 or less, 5.5 or less, 5.0 or less, or 4.5 or less.

The mixing step in the method for producing a beer-taste beverage is not particularly limited.

When the mixing step is a step of mixing the cooling material with the beer-taste stock solution and then with the edible aqueous solution, the beer-taste stock solution can be more cooled, which is more preferable. When the cooling material is mixed with the beer-taste stock solution, either an embodiment of introducing the cooling material into a container and then introducing the beer-taste stock solution thereinto or an embodiment of introducing the beer-taste stock solution into a container and then introducing the cooling material thereinto may be employed. In addition, when the mixing step is a step of mixing the cooling material with the edible aqueous solution and then with the beer-taste stock solution, the beer-taste stock solution can be cooled, which is preferable. When the cooling material is mixed with the edible aqueous solution, either an embodiment of introducing the cooling material into a container and then introducing the edible aqueous solution thereinto or an embodiment of introducing the edible aqueous solution into a container and then introducing the cooling material thereinto may be employed.

The temperatures of the beer-taste stock solution and the edible aqueous solution are not particularly limited. However, from the viewpoint of producing a beer-taste beverage having an improved degree of preference and an improved taste suitable for beer, the temperatures may be preferably 2.4°C or more, more preferably 2.6°C or more, further preferably 2.8°C or more, particularly preferably 3.0°C or more, 3.2°C or more, 3.4°C or more, 3.6°C or more, 3.8°C or more, 4.0°C or more, 4.2°C or more, 4.4°C or more, 4.6°C or more, 4.8°C or more, 5.0°C or more, 5.2°C or more, 5.4°C or more, 5.6°C or more, 5.8°C or more, 6.0°C or more, 6.5°C or more, 7.0°C or more, 7.5°C or more, or 8.0°C or more.

In addition, when the temperatures of the beer-taste stock solution and the edible aqueous solution exceed 15.0°C, the degree of preference of the resulting beer-taste beverage decreases, making it difficult to feel a clean flavor or a taste suitable for beer. Therefore, the temperature of the beer-taste stock solution is 15.0°C or less. From the viewpoint of producing a beer-taste beverage having a degree of preference, a clean flavor, and a taste suitable for beer which are improved in a well-balanced manner, the temperature is preferably 13.0°C or less, more preferably 11.0°C or less, further preferably 9.0°C or less, still further preferably 7.0°C or less, still further preferably 6.0°C or less, and particularly preferably 5.0°C or less, which may be 4.8°C or less, 4.6°C or less, 4.4°C or less, 4.2°C or less, 4.0°C or less, 3.8°C or less, 3.6°C or less, 3.4°C or less, 3.2°C or less, 3.0°C or less, 2.8°C or less, 2.6°C or less, 2.4°C or less, 2.2°C or less, or 2.0°C or less.

In the method for producing a beer-taste beverage, the container in which the mixing step is carried out is not particularly limited, but when carried out in a restaurant or the like, an open container is preferable from the standpoint of ease of implementation. Examples of the open container include a glass, a mug, and a cup.

The volume of the container is not particularly limited, but from the viewpoint of ease of implementation when the mixing step is carried out in restaurants and the like, it is preferably 3.0 L or less, which may be 2.8 L or less, 2.5 L or less, 2.0 L or less, 1.5 L or less, 1.0 L or less, 0.8 L or less, 0.6 L or less, 0.4 L or less, 0.3 L or less, 0.2 L or less, or 0.1 L or less.

The temperature of the container in which the mixing step is carried out in the method for producing a beer-taste beverage is not particularly limited. However, it is preferable to minimize the impacts on the temperatures of the beer-taste stock solution and the edible aqueous solution. The temperature of the container may be, for example, 25°C or less, 22°C or less, 20°C or less , 18°C°C or less , 15°C or less, 14°C or less, 13°C or less, 12°C or less, 11°C or less, 10°C or less, 9°C or less, 8°C or less, 7°C or less, 6°C or less, 5°C or less, 4°C or less, 3°C or less, 2°C or less, 1°C or less, or 0°C or less.

The beer-taste beverage obtained by the production method of the present invention may be a beer.

In the present description, the "beer" is a beverage obtained by using malts, hops and water as raw materials and fermenting these raw materials using yeasts. Specifically, the beer means beverages defined by the Notification of the Interpretation of the Liquor Tax Law and Other Laws and Orders relating to the Administration of Liquor Affairs (date of enforcement: April 1, 2018).

In addition, the color of the beer-taste beverage obtained by the method of the present invention is not particularly limited. The beer-taste beverage according to one embodiment of the present invention may have an amber or golden color, such as those of common beer, or may have a black color such as that of black beer, or may also be colorless and transparent. Otherwise, a desired color may be imparted to the beer-taste beverage by adding a coloring agent or the like thereto. The color of the beverage can be determined with the unaided eye, but it may also be determined using total light transmittance, chromaticity, etc.

Since the production method of the present invention comprises a mixing step of mixing a beer-taste stock solution, an edible aqueous solution, and a cooling material, a taste suitable for beer can be felt for a long period of time, making it possible to suppress a decrease in flavor due to a temperature increase, compared to production methods without the use of a cooling material.

## 5. Method for providing a beer-taste beverage

In the method for providing a beer-taste beverage according to one embodiment of the present invention, a beer-taste stock solution and an edible aqueous solution are mixed, thereby providing a beer-taste beverage. The method for providing a beer-taste beverage is carried out preferably in restaurants and the like.

In the method for providing a beer-taste beverage according to one embodiment of the present invention, the beer-taste stock solution, the edible aqueous solution, the cooling material, conditional formulas (1) to (3), the temperature, the container, and the like are the same as those in the method for producing a beer-taste beverage.

## 6. Raw material set for producing a beer-taste beverage

The raw material set for producing a beer-taste beverage according to one embodiment of the present invention includes the beer-taste stock solution, the edible aqueous solution, and the cooling material. The raw material set for producing a beer-taste beverage may further include a container and the like.

In the raw material set for producing a beer-taste beverage according to one embodiment of the present invention, the beer-taste stock solution, the edible aqueous solution, the cooling material, conditional formulas (1) to (3), the temperature, the container, and the like are the same as those in the method for producing a beer-taste beverage.

Examples

Hereinafter, the present invention will be described in more detail in the following examples, etc. However, these examples are not intended to limit the scope of the present invention.

[Examples 1 to 16, Comparative Examples 1 to 4]

< Preparation of beer-taste stock solution >

Pulverized barley malts were added into a preparation tank filled with 120 L of hot water, and the temperature was gradually increased and was then retained. The mixture was filtrated to remove malt lees and the like. After the filtration, the obtained raw material solution and hops were added into a boiling tank, and a sugar solution was then added thereto to achieve a predetermined percentage of malt. The volume of the mixed solution was adjusted to 100 L with hot water, so as to obtain a hot wort. The obtained hot wort was cooled, and ventilation was then carried out using oxygen, so as to obtain 60 L of a pre-fermentation solution before addition of a yeast.

A beer yeast (top fermentation yeast) was added to the thus obtained pre-fermentation solution, and fermentation was then carried out for about 1 week. Thereafter, a maturation period was passed further for about 1 week, and the yeast was then removed by filtration. An extract-adjusting water was added to the resulting solution to prepare a beer-taste stock solution.

The prepared beer-taste stock solution had an alcohol concentration of 16 (v/v)%, an original extract concentration of 28 mass%, and a pH of 4.4.

< Preparation of ice >

In a household refrigerator-freezer (internal temperature: -15°C), cube-shaped ice measuring 28 mm in length, 28 mm in width, and 32 mm in height was prepared (21.5 g per piece). The surface area of each ice cube obtained was 5152 $mm^2$.

< Preparation of beer-taste beverage >

A beer-taste beverage was prepared by mixing 20 mL of the obtained beer-taste stock solution and 60 mL of carbonated water (carbon dioxide gas concentration: 0.83 (w/w)%), which is an edible aqueous solution. The beer-taste stock solution and carbonated water were cooled to 5°C before use. The container used was a 0.480-L open glass container.

The number of ice cubes, the order of introducing raw materials into the container, the ratio (X) of conditional formula (1), the ratio (Y) of conditional formula (2), and the ratio (Z) of conditional formula (3) are listed in Table 1.

< Sensory evaluation >

The same 6 panelists tasted the obtained beer-taste beverages and evaluated as follows.

Individual panelists tasted the beer-taste beverages. Thereafter, with regard to the evaluation items, which are the "degree of preference," "clean taste," and "taste suitable for beer," evaluation was carried out based on the following score criteria, with scores in 1.0 steps in the range of 7.0 (maximum value) to 1.0 (minimum value), and the mean value of the scores given by the 6 panelists was then calculated.

For the evaluation, samples with the evaluation items corresponded to the following criteria "1.0," "2.0," "3.0," "4.0," "5.0," "6.0," and "7.0" had previously been prepared, and thus, the standards among individual panelists were intended to be unified. Moreover, in all of the sensory evaluations in the Examples and Comparative Examples, a score value difference of 2.0 or more was not found among individual panelists, with respect to an identical beverage.

[Degree of preference]

- "7.0": Extremely delicious
- "6.0": Delicious
- "5.0": Moderately delicious / Relatively delicious
- "4.0": Neither delicious nor not delicious
- "3.0": Relatively not delicious
- "2.0": Not delicious
- "1.0": Extremely not delicious

[Clean flavor]

- "7.0": Clearly felt
- "6.0": Felt
- "5.0": Relatively felt
- "4.0": Neither felt nor not felt
- "3.0": Relatively felt
- "2.0": Not felt
- "1.0": Clearly not felt

[Taste suitable for beer]

- "7.0": Clearly felt
- "6.0": Felt
- "5.0": Relatively felt
- "4.0": Neither felt nor not felt
- "3.0": Relatively felt
- "2.0": Not felt
- "1.0": Clearly not felt

A score of 3.8 or higher for the "degree of preference," "clean flavor," and "taste suitable for beer" was considered favorable. Beverages that had scores of 3.8 or higher for the "degree of preference," "clean flavor," and "taste suitable for beer" were judged to pass, and other beverages were judged to fail.

[Table 1]

[Table 1]

| | Comp.Ex. 1 | Comp.Ex. 2 | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Comp.Ex. 3 | Comp.Ex. 4 |
|---|---|---|---|---|---|---|---|---|---|---|---|---|---|---|---|---|---|---|---|---|
| Number of ice cubes | 1 | 1 | 1 | 1 | 2 | 2 | 2 | 2 | 3 | 3 | 3 | 3 | 4 | 4 | 5 | 5 | 5 | 5 | 6 | 6 |
| Order of introducing raw materials | Ice→Carbonated water→Stock solution | Ice→Stock solution→Carbonated water | Ice→Carbonated water→Stock solution | Ice→Stock solution→Carbonated water | Stock solution→Ice→Carbonated water | Carbonated water→Ice→Stock solution | Ice→Carbonated water→Stock solution | Ice→Stock solution→Carbonated water | Stock solution→Ice→Carbonated water | Carbonated water→Ice→Stock solution | Ice→Carbonated water→Stock solution | Ice→Stock solution→Carbonated water | Ice→Carbonated water→Stock solution | Ice→Stock solution→Carbonated water | Ice→Carbonated water→Stock solution | Ice→Stock solution→Carbonated water | Ice→Carbonated water→Stock solution | Ice→Stock solution→Carbonated water | Ice→Carbonated water→Stock solution | Ice→Stock solution→Carbonated water |
| Total weight of ice (g) | 21.5 | 21.5 | 21.5 | 21.5 | 43 | 43 | 43 | 43 | 64.5 | 64.5 | 64.5 | 64.5 | 86 | 86 | 107.5 | 107.5 | 107.5 | 107.5 | 129 | 129 |
| Total surface area of ice ($mm^2$) | 5152 | 5152 | 5152 | 5152 | 10304 | 10304 | 10304 | 10304 | 15456 | 15456 | 15456 | 15456 | 20608 | 20608 | 25760 | 25760 | 25760 | 25760 | 30912 | 30912 |
| Volume of edible aqueous solution (mL) | 165 | 165 | 60 | 60 | 60 | 60 | 60 | 60 | 60 | 60 | 60 | 60 | 60 | 60 | 60 | 60 | 30 | 30 | 30 | 30 |
| Volume of beer-taste stock solution (mL) | 55 | 55 | 20 | 20 | 20 | 20 | 20 | 20 | 20 | 20 | 20 | 20 | 20 | 20 | 20 | 20 | 10 | 10 | 10 | 10 |
| Ratio (X) | 0.10 | 0.10 | 0.27 | 0.27 | 0.54 | 0.54 | 0.54 | 0.54 | 0.81 | 0.81 | 0.81 | 0.81 | 1.08 | 1.08 | 1.34 | 1.34 | 2.69 | 2.69 | 3.23 | 3.23 |
| Ratio (Y) | 239.6 | 239.6 | 239.6 | 239.6 | 239.6 | 239.6 | 239.6 | 239.6 | 239.6 | 239.6 | 239.6 | 239.6 | 239.6 | 239.6 | 239.6 | 239.6 | 239.6 | 239.6 | 239.6 | 239.6 |
| Ratio (Z) | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| Degree of preference | 2.7 | 3 | 4 | 4.8 | 4 | 4 | 4.8 | 6.2 | 4.7 | 4.8 | 6.2 | 7 | 6.3 | 6.5 | 5.4 | 5.7 | 5 | 4.7 | 3.5 | 3.7 |
| Clean flavor | 2.2 | 2.5 | 4 | 5 | 4 | 4 | 4.8 | 6.2 | 4.8 | 4.8 | 6.2 | 7 | 6.5 | 6.5 | 6.3 | 6.3 | 6.3 | 6.7 | 6.3 | 6.7 |
| Taste suitable for beer | 3.2 | 3.2 | 4 | 4.8 | 4 | 4 | 4.8 | 6.2 | 4.7 | 4.8 | 6.2 | 7 | 6 | 6.5 | 5.2 | 5.8 | 4.7 | 4.3 | 3 | 3.3 |

| | Ex. 11 | Ex. 12 | Ex. 13 | Ex. 14 | Ex. 15 | Ex. 16 | Comp.Ex. 3 | Comp.Ex. 4 |
|---|---|---|---|---|---|---|---|---|
| Number of ice cubes | 4 | 4 | 5 | 5 | 5 | 5 | 6 | 6 |
| Order of introducing raw materials | Ice→Carbonated water→Stock solution | Ice→Stock solution→Carbonated water | Ice→Carbonated water→Stock solution | Ice→Stock solution→Carbonated water | Ice→Carbonated water→Stock solution | Ice→Stock solution→Carbonated water | Ice→Carbonated water→Stock solution | Ice→Stock solution→Carbonated water |
| Total weight of ice (g) | 86 | 86 | 107.5 | 107.5 | 107.5 | 107.5 | 129 | 129 |
| Total surface area of ice ($mm^2$) | 20608 | 20608 | 25760 | 25760 | 25760 | 25760 | 30912 | 30912 |
| Volume of edible aqueous solution (mL) | 60 | 60 | 60 | 60 | 30 | 30 | 30 | 30 |
| Volume of beer-taste stock solution (mL) | 20 | 20 | 20 | 20 | 10 | 10 | 10 | 10 |
| Ratio (X) | 1.08 | 1.08 | 1.34 | 1.34 | 2.69 | 2.69 | 3.23 | 3.23 |
| Ratio (Y) | 239.6 | 239.6 | 239.6 | 239.6 | 239.6 | 239.6 | 239.6 | 239.6 |
| Ratio (Z) | 3.0 | 3.0 | 3.0 | 3.0 | 3.0 | 3.0 | 3.0 | 3.0 |
| Degree of preference | 6.3 | 6.5 | 5.4 | 5.7 | 5 | 4.7 | 3.5 | 3.7 |
| Clean flavor | 6.5 | 6.5 | 6.3 | 6.3 | 6.3 | 6.7 | 6.3 | 6.7 |
| Taste suitable for beer | 6 | 6.5 | 5.2 | 5.8 | 4.7 | 4.3 | 3 | 3.3 |

14

From Table 1, it was found that when the ratio (X) calculated by conditional formula (1) is within a predetermined range, a highly-rated beer can be produced. From Table 1, it was found that when the ratio (X) calculated by conditional formula (1) is within a predetermined range, a highly-rated beer can be produced.

[Example 17]

In order to verify the change in flavor of beer after beer production, the flavor was evaluated immediately after and 10 minutes after beer production.

Specifically, the same beer-taste stock solutions and ice as in Examples 1 to 16 were prepared, and 20 ml of each of the beer-taste stock solutions was mixed with 60 mL of carbonated water (carbonation concentration: 4.5 GV), which is an edible aqueous solution, and ice to prepare beer-taste beverages. The beer-taste stock solution and carbonated water were cooled to 5°C before use. The container used was a 0.480-L open glass container. The number of ice cubes and the order of introducing raw materials are listed in Table2.

In addition, sensory evaluation of each beverage was performed twice: immediately after the production and after leaving it at room temperature for 10 minutes after the production. The sensory evaluation method was the same as in Examples 1 to 16.

[Table 2]

|  | Example 17 | | Comparative Example 5 | |
|---|---|---|---|---|
|  | Immediately after production | 10 minutes later | Immediately after production | 10 minutes later |
| Number of ice cubes | 3 | 3 | 0 | 0 |
| Order of introducing raw materials | Ice → Stock solution → Carbonated water | Ice → Stock solution → Carbonated water | Ice → Stock solution → Carbonated water | Ice → Stock solution → Carbonated water |
| Total weight of ice (g) | 64. 5 | n/a | 0.0 | 0.0 |
| Total surface area of ice (mm$^2$) | 15456 | n/a | 0.0 | 0.0 |
| Volume of edible aqueous solution (mL) | 60 | 60.0 | 60.0 | 60.0 |
| Volume of beer-taste stock solution (mL) | 20.00 | 20.0 | 20.0 | 20.0 |
| Ratio (X) | 0.81 | n/a | 0.00 | 0.00 |
| Ratio (Y) | 239. 6 | n/a | 0.00 | 0.00 |
| Ratio (Z) | 3.0 | 3.0 | 3.0 | 3.0 |
| Degree of preference | 6. 7 | 5.5 | 6.8 | 5.3 |
| Clean flavor | 6. 7 | 5. 5 | 6.8 | 5. 5 |
| Taste suitable for beer | 6. 7 | 5. 7 | 6. 7 | 5. 5 |
| (n/a: No data available) | | | | |

Table 2 shows that beer produced without ice (Comparative Example 5) has an excellent flavor immediately after being produced, but the flavor deteriorates rapidly over time. In contrast, it was confirmed that the beer produced using ice (Example 17) did not lose its degree of preference and taste suitable for beer even after time had passed after being produced.

**Claims**

1.  A method for producing a beer-taste beverage comprising a mixing step of mixing a beer-taste stock solution, an edible aqueous solution, and a cooling material, which satisfies the following conditional formula (1):

$$\text{Conditional formula (1): } 0.1 \leq \text{ratio (X)} \leq 3.0$$

(where the ratio (X) = a total weight of the cooling material (g) / a total volume of the beer-taste stock solution and the edible aqueous solution (mL)).

2.  The production method according to claim 1, wherein the mixing step consists of a step of mixing the cooling material with the beer-taste stock solution and then with the edible aqueous solution.

3.  The production method according to claim 1, wherein the mixing step consists of a step of mixing the cooling material with the edible aqueous solution and then with the beer-taste stock solution.

4.  The production method according to claim 1, which satisfies the following Conditional formula (3):

$$\text{Conditional formula (3): } 1.5 \leq \text{ratio (Z)} \leq 7.0$$

(where the ratio (Z) represents a total weight of the edible aqueous solution (mL) / a weight of the beer-taste stock solution (mL)).

5.  The production method according to claim 1, wherein the mixing step is performed in an open container.

6.  The production method according to claim 5, wherein the open container has a volume of 3.0 L or less.

7.  The production method according to claim 1, wherein the edible aqueous solution is an aqueous solution containing carbon dioxide.

8.  The production method according to claim 1, wherein the cooling material is ice.

9.  A beer-taste beverage produced by the production method according to claim 1.

10. A method for providing a beer-taste beverage comprising mixing a beer-taste stock solution, an edible aqueous solution, and a cooling material, which satisfies the following conditional formula (1):

$$\text{Conditional formula (1): } 0.1 \leq \text{ratio (X)} \leq 3.0$$

(where the ratio (X) represents a total weight of the cooling material (g) / a total volume of the beer-taste stock solution and the edible aqueous solution (mL)).

11. The provision method according to claim 10, wherein the cooling material is ice.

12. A raw material set for producing a beer-taste beverage comprising a beer-taste stock solution, an edible aqueous solution, and a cooling material, wherein the method satisfies the following conditional formula (1):

$$\text{Conditional formula (1): } 0.1 \leq \text{ratio (X)} \leq 3.0$$

(where the ratio (X) represents a total weight of the cooling material (g) / a total volume of the beer-taste stock solution and the edible aqueous solution (mL)).

13. The raw material set for producing a beer-taste beverage according to claim 12, wherein the cooling material is ice.

<table>
<tr><td colspan="2" align="center">**INTERNATIONAL SEARCH REPORT**</td><td colspan="2">International application No.<br>**PCT/JP2023/019996**</td></tr>
</table>

**A.    CLASSIFICATION OF SUBJECT MATTER**

*C12C 12/00*(2006.01)i; *C12G 3/021*(2019.01)i; *C12G 3/04*(2019.01)i; *A23L 2/00*(2006.01)i
FI:    C12C12/00; C12G3/021; C12G3/04; A23L2/00 T

According to International Patent Classification (IPC) or to both national classification and IPC

**B.    FIELDS SEARCHED**

Minimum documentation searched (classification system followed by classification symbols)

C12C1/00-13/10; C12G3/00-3/08; A23L2/00-2/84

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); 日経テレコン; Google

**C.    DOCUMENTS CONSIDERED TO BE RELEVANT**

| Category* | Citation of document, with indication, where appropriate, of the relevant passages | Relevant to claim No. |
|---|---|---|
| X | なんちゃってコロナ風（？） ビール☆ [onlline], 14 September 2020, pp. 1-3, [retrieved on 20 July 2022], retrieved from the internet <https://cookpad.com/recipe/5103277><br>    Recipe, Pictures, Ingredient, Update date, non-official translation (Knockoff Corona style (?) beer☆) [online]) | 1-3, 5-13 |
| A | | 4 |
| X | ビールでカクテルを作る！ 簡単に作れる１０のビールカクテル一覧 [online], 29 May 2017, pp. 1-11, [retrieved on 08 September 2022], retrieved from the internet <https://www.zehitomo.com/blog/client/how-to-make-cocktail-by-beer><br>    Text, Pictures, p. 2, 2nd paragraph, non-official translation (Make cocktails with beer! List of 10 beer cocktails you can make easily [online].) | 1-3, 5-13 |
| A | | 4 |
| A | ちょい飲みノンアルコールビール [online], 09 November 2012, pp. 1-2, [retrieved on 20 July 2022], retrieved from the internet <https://cookpad.com/recipe/1859603><br>    Recipe, Pictures, Ingredient, Update date, non-official translation (Non-alcoholic beer to drink lightly in a short time [online]) | 1-13 |

✓ Further documents are listed in the continuation of Box C.        ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 June 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/019996**

### C.    DOCUMENTS CONSIDERED TO BE RELEVANT

| Category* | Citation of document, with indication, where appropriate, of the relevant passages | Relevant to claim No. |
|---|---|---|
| A | JP 2019-205388 A (SAPPORO BREWERIES) 05 December 2019 (2019-12-05)<br>claims, examples | 1-13 |
| A | THE, O.J. 16% PREMIUM STRONG BEER EXPERIENCE BY MATTHIAS SOBERON [online]. 16 May 2019, pp. 1-4, [retrieved on 20 July 2022], retrieved from the internet <https://liquorzaar.com/blogs/news/o-j-strong-beer-16-review><br>Text, Pictures | 1-13 |
| P, X | SUNTORY NEWS RELEASE -No.14178. 日本初の炭酸水でつくる自由なビール「ビアボール」誕生 [online], 21 June 2022, pp. 1-2, [retrieved on 19 December 2022], retrieved from the internet <https://www.suntory.co.jp/news/article/mt_items/14178.pdf><br>Text, pictures, non-official translation (Birth of Japan's first unconventional beer made with carbonated water "Beer Ball" [online]) | 1-13 |

Form PCT/ISA/210 (second sheet) (January 2015)

INTERNATIONAL SEARCH REPORT
Information on patent family members

International application No.

**PCT/JP2023/019996**

| Patent document cited in search report | Publication date (day/month/year) | Patent family member(s) | Publication date (day/month/year) |
|---|---|---|---|
| JP 2019-205388 A | 05 December 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018100071 A

**Non-patent literature cited in the description**

- *Notification of the Interpretation of the Liquor Tax Law and Other Laws and Orders relating to the Administration of Liquor Affairs*, 01 April 2018
- Brewery Convention of Japan (BCOJ) (BCOJ Beer Analysis Method. Brewing Society of Japan, 2013
- Modification and Homogeneity (Calcofluor Carlsberg Method-EBC). MEBAK Raw Materials Barley Adjuncts Malt Hops And Hop Products. Chairman Dr. Fritz Jacob, 2011
- Revised Version Brewery Convention of Japan (BCOJ) Beer Analysis Method. Brewing Society of Japan, 2013